# EUROPEAN PATENT SPECIFICATION

(11) **EP 0 588 107 B1**
(45) Date of publication and mention of the grant of the patent: **27.05.1998**
(21) Application number: 93113413.4
(22) Date of filing: 23.08.1993
(51) Int. Cl.: G05D 23/19, H05B 6/68

(54) **Method for function definition and control unit device for an oven**
Verfahren zur Funktionauswahl und Steuervorrichtung für ein Ofen
Méthode de définition de function et dispositif de commande d'un fourneau

(30) Priority: 17.09.1992 SE 9202687
(43) Date of publication of application: 23.03.1994
(73) Proprietor: AKTIEBOLAGET ELECTROLUX, 105 45 Stockholm (SE)
(72) Inventor: Timgren, Roland, S-175 48 Järfälla (SE); Ljunggren, Per, S-178 52 Ekerö (SE)
(74) Representative: Bjellman, Lennart Olov Henrik

(56) References cited:
- US-A- 4 899 034
- PATENT ABSTRACTS OF JAPAN vol. 8, no. 69 (M-286) 17 Decmeber 1983 & JP-A-58 217 125

## Description

### Technical field

The present invention relates to a method for a function definition and a corresponding universal control unit device for an oven being heated electrically, or alternatively being heated by means of gas, and a universal computerized tool for the function definition of the control unit device according to the present method.

### Prior art

Ovens or cookers for cooking and baking are in Sweden generally included in a type of commodity normally referred to as white goods. These devices generally comprise many technical refinements regarding built-in preprogrammed sequences of events for the cooking as well as for baking, but also in the use a certain programmability regarding different timings and temperatures etc., and additionally also systems regarding safety for avoiding near-accidents when using the oven or cooker.

These different preprogrammed functions as well as possible input parameters for a certain application, e.g., time and temperature, as well as the type of heater element are today generally controlled by some type of electronic circuitry, normally comprising a microprocessor having attached memories in form of ROM and/or RAM type components.

For instance, such a technical solution is disclosed in U.S. 4,914,277 regarding an electrical control device in an electrical house-hold oven for automatic cooking, including learning.

In a German document EP-A2-0,432,080 is additionally disclosed a system for interactive control and selection in the use of a house-hold oven.

Common to both these systems is that they include microprocessor systems having an accompanying particular interfaced electronic circuitry performing the functions being defined for the respective oven or cooker. These systems are market and type specific regarding the main utilization of the product as well as the particular connecting prerequisites existing within different product market regions.

Thus a problem which arises in the manufacturing of this white goods when it is intended to adress a large international market will in part be for example that general rules and electrical safety regulations for those varies within a wide register from country to country, and further that such ovens and cookers also do have relatively different function definitions within the different markets. This implies that a number of different variants of these microprocessor based control systems must be manufactured preferably adapted to the respective rules and regulations except for the applications desires existing within the different markets. Thus the manufacturing cost will become unnecessary high and because of that in a certain sense limiting competition as a general production method and general components may not be utilized for instance for a cooker intended for the U.S. having two-phase 127 volts power line network of 60 Hz and general rules referring to different protection aspects respectively, and a cooker for a European country where the power distribution for instance is done via 50 Hz, 380 volts three-phase related to a general zero line having a particular relation to ground. As these different systems will require essentially different control drives for the supply of the different included electrical members, dependent of the way for instance the AC phases may be combined, the production must be separated for the different existing markets mainly because the included electric members will be combined differently by different relay control functions. Further the cooking in an American house-hold differs from for instance a European house-hold. The American house-hold relies for example in a much higher degree on semi-products or already fully prepared dishes, which on the whole only should be heated, while it much more often is usual in many European countries to start from primary products for the cooking, and as well as for example in many countries a lot of baking of bread, which is found in a limited extent within the U.S., except for eventual baking of pies.

Therefore there is a desire of a method and a device which allow a logical combination of all possible actual designs of this white goods regarding desires and standards, but utilizing one single universal base unit, which as a result of such a method at a late state during assembly may be interfaced for a certain defined market.

### Description of the invention

Firstly the present invention relates to a method for a generation of a product definition pattern for an electronic control unit device, as defined in claim 1, by means of which the product will be completely controlled and supervised.

Secondly the present invention relates to the electric control unit device, as defined in claim 5, which is applicable for all different existing varying concepts of ovens heated by electricity or by gas, especially for house-hold use.

Thirdly the present invention relates to a computerized tool, as defined in claim 11, for the generation of the product definition pattern for the electronic control unit device, intended to in connection with the production at a late state be entered into a universal electronic control unit device.

A first object of the present invention is to provide a method for the generation of a product definition pattern providing simultaneous application of logical relays in connection with, essentially, a microcomputer for the control of all existing physical relays which in a specific application perform a certain predefined process, or by a manual entering, further act on the predefined process.

Another object of the present invention is to provide a method by which it is simple to systematize the great variety of ovens which should be available within different markets regarding desirable qualities and necessary characteristics dependent on rules and regulations, whereby a definition of a function definition pattern is possible, the function definition pattern comprising a multiplicity of definition patterns each of which comprising a multiplicity of sub-definitions defining different sub-functions including possible sub-functions portions and each sub-function being primarily described by means of a data byte or a data word, in which different bits further refer to a sub-function portion within the multiplicity of possible sub-function portions, and in turn a number of sub-definitions, defining one or more sub-function portions, are put together into such a product definition pattern in the form of one or more digital words which are then transferred to the control unit device used to control and supervise the respective desired oven product.

A second object of the present invention is to provide a control unit device which comprises a communications means, through which, by means of a computerized tool, a generated integrated product definition pattern essentially in the form of data bytes or data words representing the desired product definition pattern is transferred to the control unit device at a late state during the production of an oven, and that the transferred product definition pattern then continuously will be stored in a memory device within the control unit device and setting forth the particular qualities of just this particular oven product.

Additionally there is another second object according to the present invention to provide a control unit device preferably comprising on one hand a microprocessor and additional electronics associated with that on one side of single printed circuit board, while on the other hand the other side of the printed circuit board constitutes a display for the presentation of the actual oven function by suitable symbols being turned on or off by commands from the microprocessor, the control unit device comprising on its printed circuit an included temperature sensor which in part is used for controlling the ambient temperature of the printed circuit board, and in part constituting a reference for another temperature sensor in form of an oven sensor being used for the regulation of the oven temperature and, where appropriate, for instance for safety monitoring in pyrolytic cleaning.

A third object of the present invention is to provide a computerized tool, which generates and presents in form of graphic images, e.g., on a computer display, such a product definition pattern comprising a multiplicity of definition patterns comprising a multiplicity of sub-definitions, which in turn includes a multiplicity of included possible sub-function portions and where each sub-function portion may be described preferably by means of a data byte or a data word in which different bits refer further to some sub-function portion within the multiplicity of possible sub-function portions and from which graphic images the different possible sub-function portions will be presented in the form of selectable alternatives for a logical design of different definition patterns, such a definition pattern corresponding to a certain oven function.

Another third object of the present invention is that within the computerized tool is further included logical functions corresponding to the physical functions of an oven control unit device, whereby each change of a definition pattern immediately may be checked or simulated and a supervision is performed that only possible sub-functions, or for a certain defined product allowed options of the sub-functions, may be selected out of respective available multiplicity of sub-function portions.

Another additional object of the invention is to provide a control unit device in form of one single universal integrated electronic component, which at the same time constitutes a display of the oven function and which control unit device utilizes the method according to the present invention, whereby it is easily made possible at a very late state in the production chain in the oven manufacturing, to adapt the oven to the different requirements of the different existing markets.

### Description of the drawings

The invention will be described in form of a preferred embodiment by means of the attached drawings and in which:
- Fig. 1: is a block diagram of an embodiment of an oven having different functions for which the method according to the present invention is utilized;
- Fig. 2: is a schematical block diagram to demonstrate the relation between logical relays and physical relays according to the invention;
- Fig. 3: demonstrates i form of a Table the relation between main function, a displayed symbol and the corresponding logical relay in an embodiment according to the present invention;
- Fig. 4: demonstrates in form of a table the relation between a subfunction, displayed symbol and the corresponding logical relay and the possibility of an automatic or selected function in an embodiment according to the present invention; and
- Fig. 5: demonstrates in form of a block diagram the function of a programming tool according to an embodiment of the invention.

### An embodiment of the invention

### General description

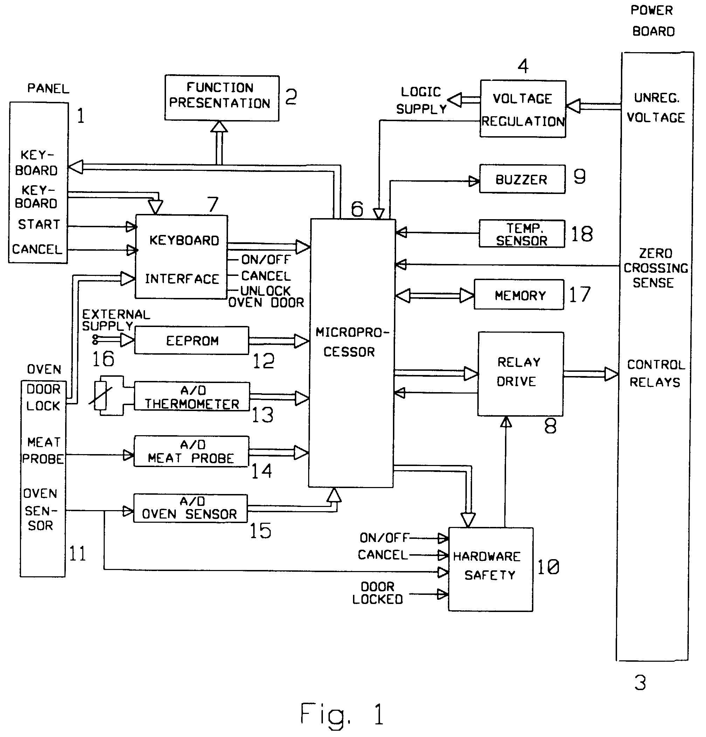

Fig. 1 demonstrates a block diagram of an embodiment of an oven control unit device (CU) for the application of the method according to the present invention. By means of the different squares in the block diagram is roughly demonstrated a number of function portions, which primarily operate together with a microprocessor 6 having an associated memory device 17 and 12, respectively, to establish the desired oven functions. The memory device 12 indicates a memory comprising read only memories and random access memories in form of ROM and RAM according to the state of the art. As an interface between the user and the microprocessor 6 there is a panel 1, which essentially comprises various key means for selection of main control functions as well as the entry of particular additional information if prestored standard values are not going to be used. A function display portion 2 displays, preferably by lit numbers or symbols, the different selected functions. Between the panel 1 and the microprocessor there is additionally an interface unit 7 which receives and transfers information to the microprocessor in part from the panel 1 but also from the oven cavity, designated 11, being provided for instance with a door lock which will be activated in certain functions. Further is shown an additional number of function squares 12, 13, 14 and 15, respectively, which constitute inputs to the microprocessor 6. By 12 is designated a nonvolatile programmable memory into which at a late state in the manufacturing process data in form of a product definition pattern will be loaded. In programming, the memory 12 is loaded via an interface unit of an external input 16. This product definition pattern is in the present embodiment a large number of data words comprising a number of digital data bytes, which by means of the external input 16 will be stored in the memory 12, in the embodiment being constituted by an ordinary standard EEPROM having a suitable storing capacity. Further the unit 13 is an analog-to-digital converter for measuring the temperature by means of a temperature sensor being preferably placed on the printed circuit board containing the microprocessor 6. Additionally there is another oven sensor within the oven 11 for measuring temperature in said oven 11, and which sensor is connected to the microprocessor 6 via an interface 15. The temperature sensor on the printed circuit board is used in part for monitoring the temperature of the printed circuit board itself, which for a high ambient temperature must be cooled not to produce incorrect functions due to that the temperature of the printed circuit board semiconductor components are above a permitted operating temperature. Upon initialization of the oven, when the oven temperature is equal to the ambient temperature the temperature sensor on the printed circuit board is also used for a comparison with the oven temperature sensor as an calibration and check of the oven sensor function. Via an additional interface it is possible according to requirements to connect a so called meat probe when cooking meat in the oven 11.

A power board 3 also comprises, except the relays needed for the control of power supply to the oven device, a rectifying device to in the case of AC operation always have access to an unregulated DC voltage. This unregulated DC voltage is applied to a voltage regulation 4 according to the state of the art for generation of stabilized low voltage DC current for the supply to the electronic control circuitry including the different blocks of Fig. 1. The power board normally comprises for example a zero crossing detector, which delivers information to the microprocessor 6 in order that action of the relays in AC operation will be able to occur at a suitable phase of the AC voltage. A relay drive 8 constitutes a physical interface between the microprocessor and the power relays needed for switching the different power supplies of the oven 11. The different power relays are either ordinary mechanical relays or preferably semiconductor relays, e.g., of thyristor type or the like, to be able to utilize on and off switching at zero crossings in the case of AC operation. In an illustrative embodiment of the oven device the power board has up to 10 power relays except a safety relay.

To the microprocessor is also connected an acoustic device 9 in form of a tone generator, e.g., a buzzer, preferably for audible acknowledgment of entries via the panel 1 as well as for a marking of improper entries. Finally there is a summarized function square 10 regarding safety in form of genuine hardware except the software safety represented by the microprocessor 6 together with the different functional units 7, 12, 13, 14 and 15 providing the microprocessor 6 with input data. Except for the functions being exemplified above there is of course incorporated, as a standard, a clock having date and time according to the state of the art, as well as one or more timing actions in the functions being serviced by means of the microprocessor and its standardized peripherals, which do not have to be discussed more in detail in this context as those parts do not constitute any part of the present invention. A more detailed description of the programming of the microprocessor 6 as such is omitted as this is established technique to a person skilled in the art and may in a standardized manner be made via different programming languages, one suitable programming language due to its modular shape is for example the C language used in the present invention.

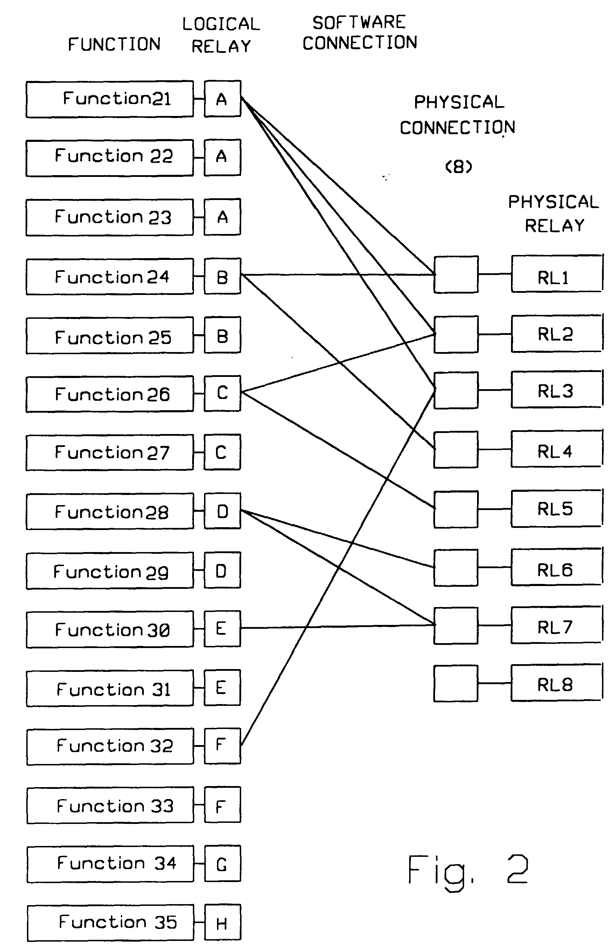

The microprocessor together with the product definition pattern stored in memory 12 produces the logical function by generation of logical relays. A logical relay according to the state of the art is generated in hardware by means of gating circuitry or entirely by software or preferably as a combination of hardware and software. For the hardware of such logical relays in the present invention is utilized so called PAL circuits, i.e., programmable array logic. In terms of software the program language C for instance is excellent in performing so called bit manipulation to produce logically gated functions. Such a gated function preferably has a number of inputs and one output, a number of conditions at the inputs give an output signal at the output terminal. Thus these generated logical relays then via the relay drive 8 control the physical relays. In Fig. 2 is shown in a simplified form according to the present invention the relation between the logical relay generated by the product definition pattern and the microprocessor 6, the physical relays doing the real switching of power supply to the different devices of the oven, such as heater elements, grill elements, grill motor, convection fan, steam generator etc. According to Fig. 2, e.g., a certain function designated 21 should via the logical relay A through the relay drive 8 act on the physical relays RL1, RL2 and RL3. In another function 24 only the physical relay group RL1 and RL4 will be influenced via the logical relay B, while a function 26 via the logical relay C should influence the physical relays RL2 and RL5 and finally a function 32 via the logical relay F should influence only the physical relay RL3. In a similar manner the logical relay D influences the physical relays RL6 and RL7 via the relay drive 8. For example, according to Fig. 2 of an illustrative embodiment, the physical relay RL1 controls a first portion of the top heat element, RL2 a second portion of the top heat element, and RL3 a bottom heat element of the oven, while, e.g., RL4 and RL5 in combination with RL1 and RL2 control the grill elements, RL6 controls the convection element, RL7 controls the convection fan and RL8 i cooperation with the other relays, among other things, controls the oven light. Then the function 21 should establish top and bottom heat in the oven. The function 24 gives a certain top heat combined with a grill element, while in function 28 the convection heater and convention fan are activated. On the other side the function 30 should establish only function of the convection fan. Function 26 should for instance produce a stronger top heat with a smaller portion of the grill element connected compared to function 24. Each logical relay may be selected only once within a main function, while the logical relays are related to the physical relays via a parameter list and consequently two logical relays may have the same physical relay.

By generating suitable logical relays for the control of different combinations of physical relays it is possible, according to the present invention, to utilize a general concept of hardware in form of different electric elements, fans, steam generators and the like. The logical relays then establish, through the definition pattern which in advance has been entered and stored in the control unit device CU, a certain function in cooperation with its general electronic circuitry. This further implies that in one and the same assembly line products for different markets having totally different specification may be finalized, the definition of an oven type primarily being dependent on the product definition pattern being composed of a certain number of function definitions in form of separate definition patterns, which at a late state in the finalization of the product is entered into the control unit device programmable nonvolatile memory 12. Additionally this implies that for all production variants only a standardized control unit device CU is needed. The final product primarily is dependent of the product definition pattern being entered into the control unit device CU, while the hardware of course is also possible to adapt from the economical point of view in a normal manner according to the state of the art by not including for instance the hardware devices for example for convection heat or pyrolytic cleaning and the respective associated physical relays if the market, for which this device is intended, does not have a requirement of these functions and these functions then neither will be incorporated within the product definition patterns for just this market. In this manner by means of the product definition patterns a modular design is achieved, which simply may be supervised by means of a particularly designed computerized tool, which additionally is also used to generate the desired product definition patterns.

Generally may be set forth that a particular function is constructed by one or more subfunction portions, together or separately producing a subdefinition of a main function. This subdefinition together with one or more other subdefinitions will in turn be defining a definition pattern of a given main function. Another such subdefinition may be one setting forth for example a temperature range within which the temperature is allowed to vary for said main function. A further subdefinition may be within which range a preset temperature, via entry from panel 1 of Fig. 1, will be permitted to vary. Each such definition pattern, preferably being built-up by a number of subdefinitions, are put together in the illustrative embodiment in a number of digital data words having 2, 3 or 4 bytes, a definition pattern for instance generating a digital binary bit pattern comprising 64 or 128 bits. Thus each such bit pattern or definition pattern defines a certain main function. By combining all such bit patterns, each representing a function out of all desired functions, the defined product definition pattern discussed above is then achieved.

Thus, in summary, the product definition pattern comprises, except general parameters and input/output matrixes, a number of definition patterns each defining its main function. On the other hand the definition patterns are constituting one or more subdefinitions, defining different subfunctions and these subfunctions are thus further comprising subfunction portions, which for example may be parameters like offset, swing or power of a certain main function.

A great advantage which is obtained by this method is further, that it is utterly simple to change a certain function of a certain market, and simultaneously in the design and assembly of the product when the product definition pattern will be entered into its memory, it is also easy at the same time to perform a function test of all the functions of the complete control unit device, as well as a check that all involved relays are properly working. The production cost of a large number of variants of the product then is made much lower compared to the state of the art, which essentially relies on a number of main series for the different markets.

Below will be described in detail a preferred embodiment regarding a few different functions, which according to the present invention are controlled by means of a product definition pattern in form of a digital bit pattern being entered into a memory device of a general control unit device CU comprising a microprocessor having control and display devices, whereby logical relays are utilized to achieve the desired functions.

### Detailed description

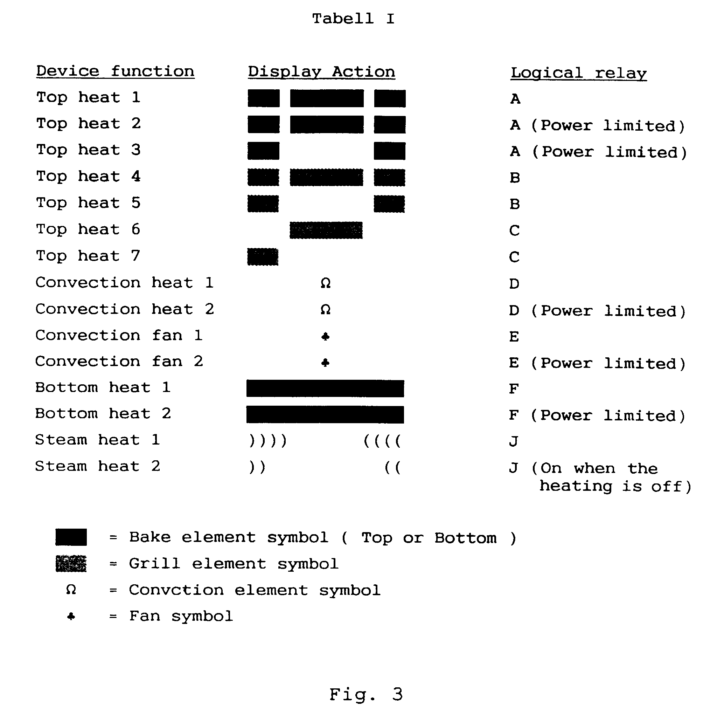

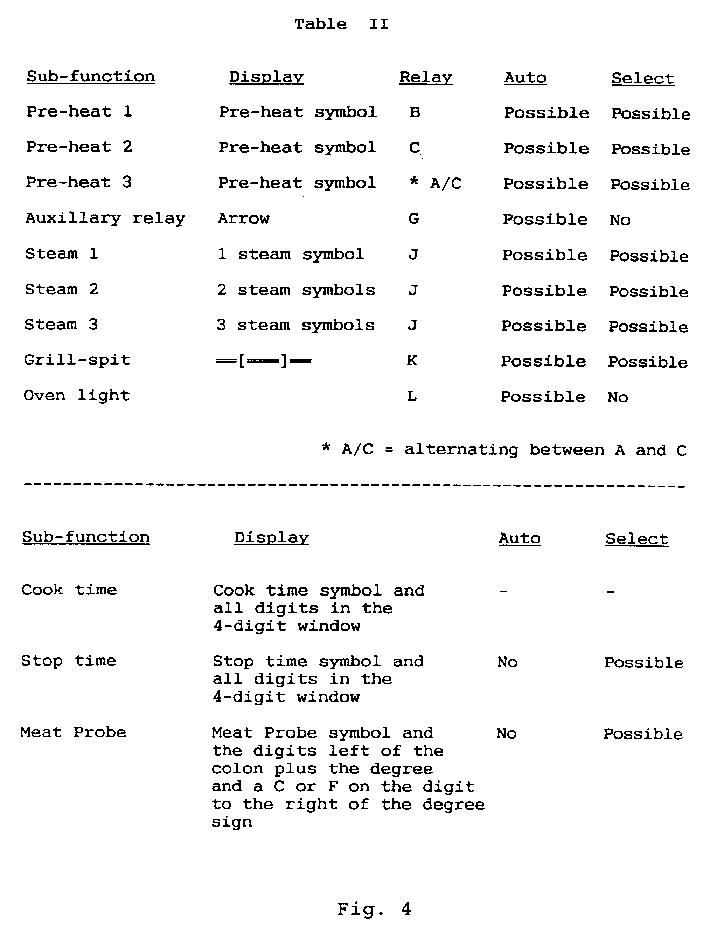

Now a detailed description will be made of the preferred embodiment referring among other things to Figure 3 and 4. In the preferred embodiment a definition pattern of a function comprises up to four selectable oven device functions f1 - f4 having a corresponding display window presentation and associated relay handling according to Fig. 3.

Each definition pattern or main function consists of four blocks with parameters according to the following set up and in the preferred embodiment comprising 128 digital bits, a number of bits not being utilized but reserved for future expansions:

| Block 1 | Block 2 | Block 3 | Block 4 |
|---|---|---|---|
| Oven device functions | Regulation information | Subfunction information | Default inform. |
| f1 f2 f3 f4 | Type % Offset Swing | Auto Select | D |

- Block 1: Oven device functions
Up to four oven device functions can be selected from the main functions concept list according to Table I of Fig. 3.
- Block 2: Regulation information
This block consists of the regulation parameters for the function devices of Block 1.
Type 1 Temperature is regulated where f1 to f3 shall be temperature regulated. That means that f4 will be ON all the time or act according to the device function list. (in the embodiment f4 is used mainly for the convection fan).
Type 2 Temperature is regulated where f1 and f2 shall be temperature regulated. This means that f3 and f4 will be handled as described for f4 in "Type 1" above.
Type 3 Defines if power regulation instead of temperature regulation is selected on f1 to f3. That means that the power value should be set by the user and displayed in a numerical 3-digit field. No factory power limited device function can here be selected in Block 1. (f4 will be handled as described for f4 in "Type 1" above.)
Type 4 Pyrolytic cleaning. This is a temperature regulated function. Temperature regulation on f1-f3. The numerical 3-digit display window will show "Pyr". The door lock relay H and the door lock symbol is selected.
Type 5 Steam. The auxiliary relay (logical relay G) is selected but the symbol of this is not lit. Temperature regulation on f1-f2.
Type 6 Economical function will switch off f1-f3 five minutes before end of cooking if a cook time is programmed and if oven temperature ≥ input temperature, and the auxiliary arrow will be lit. Temperature regulation on f1-f3.
% If a power limitation is selected from the function device list a percentage value must be defined here
- Range : 5 ... 100%
- Resolution : 5 %

Offset Here are defined the offsets for a low band temperature range or band, a mid band and a high band, the offset parameters (P1, P2, P3) being:
- Range : -35 ... +35 °C
- Resolution : 1 °C

Swing Here is defined swing for the low band, mid band and high band, the swing parameters - (P4, P5, P6) being:
- Range : -10 ... +10 °C
- Resolution : 0,5 °C
- Block 3: Subfunction information
Auto Here are all subfunctions that are possible to preselect and which automatically shall operate with the defined main function.
Select Here are all subfunctions that may be used together with the defined main function.
- Block 4: Default information
D Here is defined the default temperature or power level. This field may also be used to define that no manual entry is allowed or no default value.
Default temperature:
- Range : Min. ... max oven temperature
- Resolution : 5 °C resp. 10 °F
Default power :
- Range : 10 ... 100%
- Resolution : 10%
Default Pyrolytic cleaning temperature (OT):
- Range : 400 ... 520 °C
- Resolution : 20 °C

From Block 1 it is evident that according to a preferred embodiment of the present invention it is possible to in a definition pattern relate up to four functions. Examples of such functions are shown in Table I, Fig. 3. In Table I is demonstrated the relation between main function, displayed symbol and the corresponding logical relay for an illustrative embodiment according to the present invention.

By selecting f1 = top heat 1 and f2 = bottom heat 2 a main function for baking is achieved where the bottom heat further is controlled by some function stated by information in the definition pattern Block 2 to Block 4. By selecting f1 = top heat 2, f2 = bottom heat 2, f3 = convection heat 2 and f4 = convection fan 1, a convection heat oven for baking is achieved where the heater elements in turn are controlled by the information of Block 2 - 4. The sensing of the oven temperature is performed via the oven sensor shown in square 11 of Fig. 1. According to this method a number of different desired main functions are defined for the oven in form of definition patterns which by means of the microprocessor 6 (Fig. 1) will generate the one logical relay or those needed for the control of the different functions for instance shown in Fig. 3.

Table II of Fig. 4 additionally shows a number of subfunctions which generally also will operate the symbol field and the standard symbols of the function display window 2 (Fig. 1) on the control unit device CU, but excluding the steam functions. For example the CU according to the preferred embodiment is providing three different options of logical relays for the control of the pre-heat function. This function in turn utilizes a so called pre-heat control. The pre-heat function uses another element or changes over to another element during the heat up mode. The heat up mode may only be active during the following conditions: a) starting from cold oven < 75°C and temperature entered ≥ 150°C and pre-heat selected, or b) the temperature entered has been increased such that the heat up mode is activated and the subfunction heating is entered via the panel 1 after the change of temperature.

Pre-heat 3 is a special pre-heat function. The function deactivates heat up of the ordinary top element (relay A) and will during the heat up be utilizing the grill element (relay C) . When pre-heat is finished the heating is connected to the ordinary element.

Additionally the control unit device CU is providing, according to Table II of Fig. 4, three different levels of steam cooking. To perform different steam cooking functions the steam relay is power regulated by a configuration parameter for each steam function. The steam control function requires that the oven temperature is above a certain temperature depending on condensation aspects (the temperature must be over a "dew point" temperature). The subfunction is deactivated if the set temperature is below this temperature. The steam generator is power regulated and will not be influenced by the temperature regulation. Thus each steam function is then having a configured power level in the configuration list. The time-base for the control is the same as for all other regulated functions. Each time a steam cooking function is selected by the control unit device or a new steam cooking level is selected by the user a two minute interval having full (100%) steam cooking is started after which the steam cooking returns to the selected level.

The function grill spit of Fig. 4 only controls the grill spit motor while the function for meat probe firstly ensure detection that the meat probe is connected and further that the system receives a signal when the present meat temperature has reached the set value.

The control unit device CU provides a cook time function, which has to be able to operate with the stop time function to establish a delayed main function. I.e., the oven is started at a specific time by the clock and will then be stopped after the time period stated by the stop time.

The oven light to be de-energized, e.g. during pyrolytic cleaning, requires normally a separate logical relay, as well as also preferably a corresponding physical relay, e.g., RL8 in the example mentioned in the general description above.

The subfunction auxiliary relay controls an auxiliary relay. This subfunction is controlled by the programmed cook modes and will be disconnected after that a programmed cook mode enters the state "Ready". This relay is used for example at ovens where an external power outlet is desired for some other device like, e.g., a coffee machine etc. which is common within certain markets.

The control unit device CU according to the invention regulates the temperature divided into three temperature bands. The offset parameters are used to compensate measurement errors in the oven sensor depending on its position and the shape of the oven space. The selection of offset parameter depends on the element configuration for each cook function, if the convection fan is used or not and in which temperature band the oven is selected to operate.

The offset parameter is defined as the difference between the temperature in the oven center and the measured sensor temperature ST at the oven sensor. The measured sensor temperature plus the used offset parameter defines the oven temperature OT.

The swing parameters are used to establish ON/OFF temperatures for the temperature regulation. Each band has its own swing parameter. This parameter is given with a ± figure round the oven temperature OT. Each temperature band is defined as the temperature range between two break points.

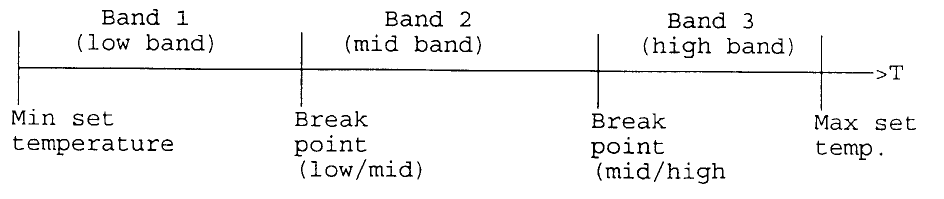

The points are minimum setting temperature, two break points and maximum setting temperature. The break points are defined as the temperature where a new band starts. The break point temperature is related to the entered (set) temperature ET and the break parameters for the low band to mid band and mid band to high band constituting general parameters for all cook functions (main functions). The temperature regulation is otherwise carried out according to a manner known by a person skilled in the art, why a further detailed description of its time process is omitted.

Power limited regulation is based on the temperature regulation above and the power limiting of the selected element. The power cycle is synchronized with the temperature cycle on switching. When the temperature cycle is switched off the power cycle is also switched off. The power limiting is carried out by using the configured time-base and configured percentage of the cycle time expressed as a percentage, below called the duty factor. The power limiting cannot be controlled by the user but the limiting is preprogrammed and configurated by the oven manufacturer. For instance this makes a possibility to use the grill element as a top baking element. Anyhow note that the time-base for power regulation and power limiting is a general parameter. If temperature regulation is used the time-base is reset each time the temperature switches on.

During power regulation the element/elements duty factor shall be controlled by a configured time-base (period) and the duty factor percentage selected by the user. The setting of the numerical value of the percentage is performed via a numerical 3-digit field.

Independent of the setting of power level the temperature of the oven cavity will be limited by the maximum oven temperature.

In pyrolytic cleaning regulation the regulation is the same as in temperature regulation but with the exception that the oven temperature is fixed, having a given value which cannot be changed by the user.

In the control unit device CU according to the present embodiment there are two ways of controlling the convection fan: a) the fan will be working during the full cook operation together with selected elements, b) when the elements are switched on the fan is switched off and when the elements are switched off the fan is switched on. This therefore can be used only with temperature regulation.

Steam heat 1 and 2 (Table I) are two particular functions for steam cooking, in steam heat 1 the steam generator being the only heating source, while in steam heat 2 the steam generator is alternating with a heater element.

In the function steam heat 1 of Fig. 4 the steam heat relay will be on when this function is active. The auxiliary relay will be selected by the type # in Block 2 of the main function parameters. The auxiliary relay will operate in the following manner:
a) if cook time is not programmed it will be switched on when this main function is active,
b) if a cook time is programmed the auxiliary relay be deactivated 5 minute before end of cooking,
c) if a cook time is selected being less than 5 minutes the auxiliary relay will be deactivated.

In function steam heat 2 of Fig. 4 this is a function intended to be combined with convection heat 2 (Fig. 3). The steam heat relay is switched on when the power limited convection element is switched off when the temperature cycle is switched on. This is in order to obtain a lower total power consumption from the power supply.

All temperature regulation is carried out generally according to established technique and will not be further discussed in detail here as this constitutes no part of the present invention. Here a simple example of a possible implementation of the configuration method is given, the stored bit pattern of the data words of a definition pattern of a simple baking oven function will be comprising the following information:
- f1 =: Top heat 1
- f2 =: Bottom heat 1
- f3 =: No (not used)
- f4 =: No (not used)
- Type =: 1 (temperature regulated)
- % =: Not used (no power regulation)
- Offset =: P1, P2, P3 (3 parameters)
- Swing =: P4, P5, P6 (3 parameters)
- Auto =: No (no subfunctions shall automatically be activated)
- Select =: Pre-heat 1 (possible to be manually selected from panel as a subfunction)
- D =: 225 (°C)

From Table I it is evident that primarily the defined logical relays A and F will be operating, eventually together with the logical relay B during a pre-heat if this function from the panel is manually selected to be active. In this baking oven function no oven temperature must be selected, but it is set forth to be 225°C, the total temperature regulation of the oven is controlled by use of the established six parameters P1-P6. The display window will show the symbols for top heat 1 and bottom heat 1, and eventually the symbol for pre-heat during the time that might be active. Additionally it is possible, if desired, to for instance manually activate the subfunctions cook time and stop time by in a sequence entering the respective times in a 4-digit panel display window in a standard manner.

The product definition pattern in a standardized way further comprises certain parameters for the oven safety functions. These functions refer to, e.g., if a component should break, the oven function should not be influenced in a way to represent a danger which could damage the user, but these parameters are not further discussed here as those are representing the state of the art and thus as such not constituting any part of the invention.

Consequently, it is simple, from a starting point with one single basic series regarding hardware and its assembly, to accomplish all the desired marketed oven models, which additionally are adapted to the different marketing desires and requirements by the use of product definition patterns according to the present invention. These product definition patterns, being stored in the uniform oven control unit device CU, in turn consist of a number of definition patterns defining different main functions of the product. This implies that a designer may work in a totally different place than where the manufacturing takes place and the necessary product definition pattern for a certain oven model is delivered for example as a standard data floppy disc to the manufacturing division, which at a late state in the assembly of the, as to the rest as standard modules, available hardware by means of a computerized tool in form of a programming tool unit PTU adapted for this embodiment, which will be transferring this production definition pattern to the control unit device CU being installed in the product, whereby is obtained a final product having the function properties set forth by the designer. Because the total operation manner of the design in principal is inherent in the production definition pattern this gives a possibility to test each system variant in advance, as well as a testing during production of each type of oven will be easily performed by means of a suitable computerized tool. Consequently in the assembly may be used in principle identical assembly methods for all oven models, which of course implies great cost savings and also facilitating a competitive product in price.

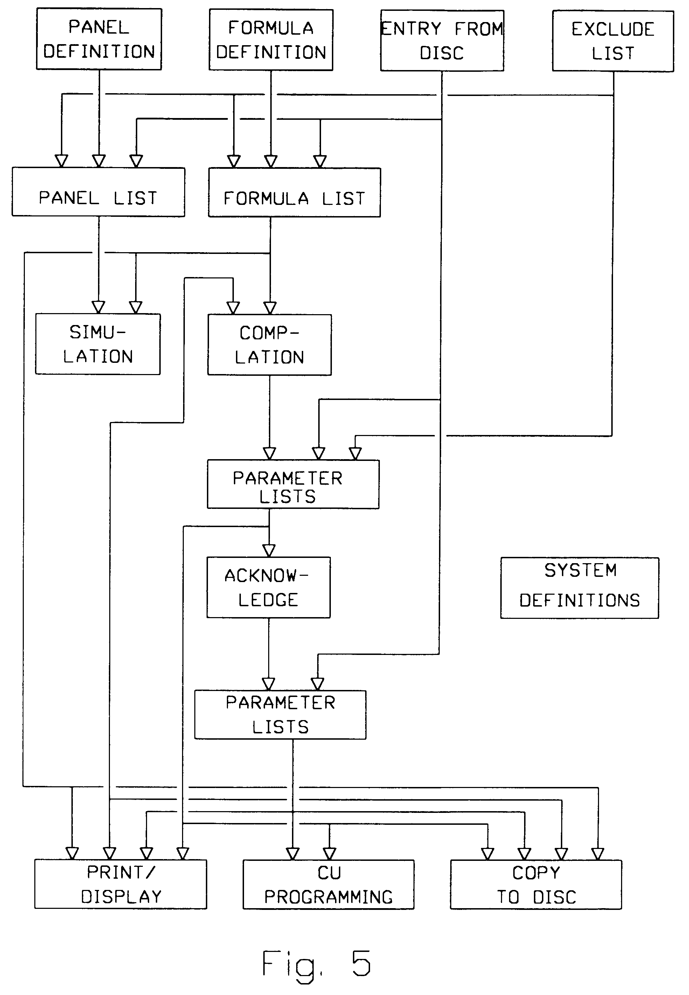

Thus to fully utilize the flexibility of the method according to the present invention additionally is utilized a computerized tool or developing tool unit DTU for the generation of the different product definition patterns. The development tool unit DTU is preferably built-up using an AT compatible personal computer having a processor at least of type 286, and preferably of a type 386 or 486 and further having a space for at least two full length expansion boards. The function of the computerized tool is demonstrated in Fig. 5 in form of a block diagram of an illustrative embodiment. Its function may principally be compared to a very specific high level language enabling the designer preferably by means of graphical images to set up options and commands, according to the state of the art, designing the different definition patterns included in a product definition pattern, as well as for communicating with an eventually connected control unit device CU. The manner of using the computerized tool is roughly in principal as demonstrated below.

Starting with the market to which the product is to be adapted, panel definitions, formula definitions and an exclude list will be entered. Starting from this a panel list and a formula list will be generated. By means of the panel list the functions are primarily simulated. From the formula list a parameter list constituting the product definition pattern is compiled, in the compilation is further checked that the functions are possible and allowed. After that the obtained parameter list has been acknowledged it constitutes the product definition pattern to be entered into a control unit device CU to finally set forth the qualities and full function of the product. Further, if desired, a storage of the panel list will be obtained on a fixed disc or a floppy disc, simultaneously as the list will be displayed or printed.

The computerized tool in the illustrative embodiment is constituted by a hardware device in form of an electronic circuit board preferably being inserted into the personal computer via its modular bus connector. This hardware device comprises then generally primarily an electronic circuitry like the one included on the control unit device circuit board, but does not have the control unit device display window, which is replaced by the computer display. Further the direct difference is that the computerized tool includes additional hardware and software according to the state of the art to perform the communication with an operator in the generation of a definition pattern of an oven function according to given standards regarding the specific specifications and safety requirement of a certain market and contains a number of test procedures. Because the computerized tool in function will be corresponding to the control unit device electronic function the possibility is automatically obtained also in direct testing to simulate the ready-made product.

In a second illustrative embodiment intended primarily for the transfer of product definition patterns to control unit devices CU the computerized tool in form of a programming tool unit PTU is comprising preferably only the additional software and hardware and is connected via a cable or a wireless link to an oven control unit device CU to perform its function, e.g., only test the control unit device CU or to load the product definition pattern into that and subsequently check the programmed control unit device.

The developing tool unit DTU primarily administrates the generation or the programming of the product definition pattern for an oven using a predefined parameter list describing the particular specifications of the different markets, which have to be fulfilled as well as all other in advance given factors which must be incorporated in the definition of the different main functions. The operation by means of this computerized tool is described by means of some different simple examples of use and how the operator OP interacts with the programming tool unit PTU and communicates with this to generate bit patterns for the use in the oven control unit device CU or for loading of a product definition pattern into a control unit device CU. Consequently in the examples the designator OP refers to the operator, DTU to the developing tool unit, PTU to the programming tool unit and CU to the oven control unit device.

### Example 1

Below is demonstrated an example of the method in the generation of a product definition pattern by means of a computerized tool in form of the developing tool unit DTU, where the product definition pattern for simplicity contains only one definition pattern for a main function, which additionally comprises one subdefinition having a changed subfunction portion in form of a changed minimum temperature value for the first band (Band 1, parameter P1) for the simple baking oven function given as an example above:

| | | |
|---|---|---|
| 0 | OP | Command for initialization of DTU; |
| 1 | DTU | Acknowledges initialization "Ready"; |
| 2 | OP | Programming mode; |
| 3 | DTU | Prompts for a data file having the specifications for the actual market; |
| 4 | OP | Enters a suitable in advance stored data file; |
| 5 | DTU | Reads stated data file, acknowledge reading by the "Ready" character; |
| 6 | OP | Starts programming a definition pattern; |
| 7 | DTU | Displays a graphical presentation of Block 1 and possible main functions, prompts function fl; |
| 8 | OP | Enters first function f1 = top heat 1; |
| 9 | DTU | Reads fl, prompts function f2; |
| 10 | OP | Enters second function f2 = bottom heat 1; |
| 11 | DTU | Reads f2, prompts function f3; |
| 12 | OP | No; |
| 13 | DTU | Reads "No" and displays graphically type options, and prompts the operator to enter Type; |
| 14 | OP | Enters 1 for temperature regulation; |
| 15 | DTU | Displays graphically the parameters P1 - P6, prompts if any parameter is needed to be changed; |
| 16 | OP | Yes; |
| 17 | DTU | Reads Yes, prompts which parameter and new value; |
| 18 | OP | P1, and enters a new value of P1; |
| 19 | DTU | Displays graphically parameters P1 - P6, prompts if any is needing modification; |
| 20 | OP | No; |
| 21 | DTU | Displays graphically options for automatic functions for the chosen combination of f1, f2; |
| 22 | OP | Auto; |
| 23 | DTU | Reads Auto, displays in the graphic presentation the normal value 225 °C, prompts if normal value is desired; |
| 24 | OP | D; |
| 25 | DTU | Reads D, performs a check that the entered function configuration is possible and allowed within the market stated in step 3, states "OK" to operator, and prompts additional main functions; |
| 26 | OP | No; |
| 27 | DTU | Reads "No", prompts operator of a file name of the generated definition pattern; |
| 28 | OP | TEST1; |
| 29 | DTU | Stores data the specifically generated pattern under file name TEST1 plus a general information in form of for example input/output matrixes etc., constituting the ready product definition pattern prepared to be entered into a control unit device CU and then signals "Ready" to operator; |
| 30 | DTU | Stop. |

### Example 2

A handshake procedure is established during the programming of a control unit device. The handshake must ensure data exchange between PTU and CU and also provide error handling. The product definition pattern is present in form of a bit pattern list in the form of a named data file.

Programming is performed for only one type of oven, why the operator only has to enter the model identity once. This procedure is used at the factory to finally decide the function of an oven model.

| Step | Source | Action |
|---|---|---|
| 0 | OP | Commands PTU to set up file (for example TEST1) and to only handle one type of oven |
| 1 | OP | Preparation of communication transfer between PTU oct CU; |
| 2 | OP | Connects power cable to oven; |
| 3 | OP | Command for initialization of CU; |
| 4 | PTU | Activates safety transformer; |
| 5 | CU | CU is powered, initialization starts; |
| 6 | CU | Initialization ready (sends "Ready" character) |
| 7 | PTU | Gets "Ready" character, initialization is ready and programming starts; |
| 8 | CU | Acknowledge Receiving when receiving programming command; |
| 9 | PTU | Distribution of bit pattern list completed, waits for CU ready handshake; |
| 10 | CU | Receives end of bit pattern list, finishing EEPROM writing, performs a check and handshakes "Ready"; |
| 11 | PTU | PTU receives "Ready" character, alerts operator; |
| 12 | OP | Starts safety test of oven according to factory standard; |
| 13 | PTU | Activates protective transformer, commands CU to activate safety relay; |
| 14 | CU | Activates safety relay, sends handshake; |
| 15 | PTU | Receives "Ready" character activates safety test according to factory standard; |
| 16 | PTU | Gets "Ready" indication within limit time, deactivates protective transformer and safety test, alerts operator; |
| 17 | PTU | Commands CU to perform oven tests; |
| 18 | PTU | Measures oven activity; |
| 19 | PTU | Evaluates measurement, signals "OK"; |
| 20 | PTU | Alerts operator to end testing; |
| 21 | PTU | Stop; |
| 22 | OP | Disconnects the connection between PTU and CU and disconnects power from oven; |

### Example 3

An example of test procedure of an oven being performed by means of the computerized tool PTU, and which incorporates the following information:
o Prompts operator to acknowledge to start a test of an oven;
o Alerts of operator to check the display, alert time set;
o Test of display, model identity and buzzer, prompts for test evaluation from the operator. Input data string;
o Test of keyboard. Keyboard activation string;
o Alerts the operator to check the oven temperature, temperature limits;
o Test of oven sensor. Oven sensor limits;
o Test of meat probe. Meat probe limits;
o Test of door locking;
o Test of door unlocking
o Test of power board and oven devices, automatically
o Test of the OFF-key entry
o Alerts the operator to press the OFF-key
o Alerts the operator to end the testing

In such a test of an oven by means of the development tool unit, DTU, a sequence summarized below is obtained:

| Step | Source | Action |
|---|---|---|
| 1 | CU | Sends ready handshake after the programming is verified by the CU; |
| 2 | PTU | Gets ready handshake within limit time, starts to read the test procedure list and prompts for acknowledge to proceed; |
| 3 | OP | Acknowledge; |
| 4 | PTU | Alerts operator to check the display during specified time; |
| 5 | PTU | Commands CU to run test routine #1 to enable test of the display, prompts for test evalu- |
| | | ation from the operator; |
| 6 | OP | Enters "OK". |
| 7 | PTU | Commands CU to run test routine #1 to enable test of the keyboard, displays message to start depressing keys (except the OFF-key); |
| 8 | OP | Starts robot to depress the keys; |
| 9 | CU | Sends key number to PTU for each time a key is depressed; |
| 10 | PTU | Receives key activation string from CU and alerts operator for next test when the string is complete and valid; |
| 11 | PTU | Alerts the operator to check the oven temperature; |
| 12 | PTU | Commands the CU to display and send measured oven temperature; |
| 13 | PTU | Evaluates oven temperature limits. Prompts for test acceptance; |
| 14 | OP | Enters command for repetition of the test, due to some interruption; |
| 15 | PTU | Commands the CU to display measured oven temperature and send to PTU; |
| 16 | PTU | Evaluates oven temperature limits. Prompts for test evaluation; |
| 17 | OP | Enters "OK". |
| 18 | PTU | Alerts the operator to insert a test meat probe; |
| 19 | PTU | Commands the CU to display measured meat probe temperature and send data to PTU; |
| 20 | PTU | Evaluates and prompts for test evaluation; |
| 21 | OP | Enters "OK". |
| 22 | PTU | Commands door locking; |
| 23 | CU | Indicates "Not ready", locks door, indicates "Ready" when door locked; |
| 24 | PTU | Commands door unlocking; |
| 25 | CU | Indicates "Not ready", unlocks door, indicates "Ready" when door unlocked; |
| 26 | PTU | Commands to run oven device/relays automatic test; |
| 27 | CU | Receives command, handshakes "Ready", performs a test of oven devices and relays; |
| 28 | PTU | Starts the measuring procedure receiving "Ready" indication, evaluates measuring data and CU switching of oven devices/relays; |
| 29 | CU | Sends "Ready" when test is finished; |
| 30 | PTU | After the time window of the test is completed and "Ready" is received from the CU and the evaluation of data indicates OK, the PTU commands the CU to read an OFF-key entry; |
| 31 | PTU | Alerts the operator to press the OFF-key; |
| 32 | OP | Depresses the OFF-key; |
| 33 | CU | Handshakes "Ready"; |
| 34 | PTU | Alerts the operator to end the testing; |
| 35 | PTU | Stop. |
| 36 | OP | Disconnects the connection between DTU and CU and disconnects power from the oven. |

From above it is clear that by means of the method according to the present invention and by utilizing only one single basic control unit device and by utilizing a computerized tool it is possible from one single basic module to accomplish any to a market adapted function of an oven for baking and cooking.

The above described embodiments are not intended in any way to impose a limitation to the invention, but are only an informative way, of many ways, to clarify the purpose of the present invention. The scope of the invention is defined below by the appended claims.

## Claims

1. A method to define and program a universal control unit device (CU) capable of being configured to control a variety of types of oven, said oven being either heated electrically or by means of gas,
the control unit device (CU) comprising inputs for electrical connection of at least a temperature sensor and manually activated setting means and outputs for electrical control of one or more of; heater elements, gas burner, grill elements, convection fan, steam generator, rotating grill spit, microwave generator, additional cooling fan for general cooling of said control unit device as well as inputs and outputs for safety functions;
the control unit device (CU) further comprising a microprocessor (6) and logic electronic circuitry as well as memory means (12, 17) storing a control program and manually entered control data of said oven, the microprocessor (6) being organized to fetch necessary program and control data information from said memory means (12, 17) in order to perform desired oven functions (21-35), **characterized in that**
a computerized tool in the form of a developing tool unit (DTU) generates a product definition pattern for each oven type,
the said product definition pattern comprises a multiplicity of definition patterns each of which, in turn, comprising a multiplicity of sub-definitions which define sub-functions, the said sub-functions also in turn comprising a muliplicity of different possible sub-function portions, where each sub-function portion may be described by means of a data byte or a data word in which different bits relate to a particular function in a multiplicity of possible functions (21-35),
the complete control unit device (CU) function further is defined by a combination of a number of such definition patterns into said product definition pattern, which then is used and interpreted by said microprocessor (6) to perform said control to obtain said desired oven functions,
and in that by means of said definition patterns logical relays are generated, the logical outputs (A-H) of which are used to directly or indirectly control physical relays (RL1-RL8) to obtain said desired oven functions.

2. The method according to claim 1, **characterized in** that within said developing tool unit (DTU), which generates said product definition pattern representing the desired oven function, definition patterns of predefined possible different allowed function combinations are included which are dependent on the logical construction of hardware and software of said developing tool unit as well as corresponding to hardware and software, respectively, of said oven control unit device (CU).

3. The method according to claim 2, **characterized in**
a use of a programming tool unit (PTU) comprising a communication means, by means of which said product definition pattern, generated by said developing tool unit (DTU) essentially in the form of data bytes or data words representing said definition patterns, is transferred to said control unit device (CU), primarily at a late state during the manufacturing; and
that said transferred product definition pattern is then continuously stored in one for this purpose particularly arranged programmable non-volatile memory device (12) in said control unit device (CU), to then decide the specific qualities which are controlled by this control unit device in a desired final product.

4. The method according to claim 3, **characterized in that** predefined factors initially controlling the possibility of different allowed function combinations represent the technical logical hardware and software definitions of said developing tool unit (DTU), each manufactured variant of said final product being function simulated already upon the generation of said product definition pattern.

5. A control unit device (CU) capable of being configured to control a variety of types of oven, said oven being either heated electrically or alternatively by means of gas,
the control unit device (CU) comprising inputs for electrical connection of at least a temperature sensor and manually activated setting means and outputs for electrical control of one or more of; heater elements, gas burner, grill elements, convection fan, steam generator, rotating grill spit, microwave generator, additional cooling fan for general cooling of said control unit device as well as inputs and outputs for safety functions,
the control unit device (CU) further comprising a microprocessor (6) and logic electronic circuitry as well as memory means (12, 17) storing a control program and manually entered control data of said oven, the microprocessor (6) being organized to fetch necessary program and control data information from said memory means (12, 17) in order to perform desired oven functions,
**characterized in that**
said control unit device (CU) is configured to control and supervise a particular one of said types of oven by means of a product definition pattern generated by a computerized tool in the form of a developing tool unit (DTU) and stored in a programmable nonvolatile memory portion (12) of said memory means (12, 17),
said product definition pattern includes a multiplicity of definition patterns, each of which, in turn, comprises a multiplicity of sub-definitions which define sub-functions, the said sub-functions also in turn comprising a multiplicity of different possible sub-function portions, where each sub-function portion relates to a particular function in a multiplicity of possible functions (21-35), and
in that by means of said definition patterns logical relays are generated, the logical outputs (A-H) of which are used to directly or indirectly control physical relays (RL1-RL8) to obtain said desired oven functions.

6. The control unit according to claim 5, **characterized in** that
said control unit device forms a universal component designed for all, in different markets available, product variants, and
said control unit device (CU) then comprises in part a first integrated physical unit to be simply released and replaced, and in part constitutes a second physical unit (3) comprising power supply and relays for the operation of the different functional members, said second unit also to be simply released and replaced,
said first unit simultaneously constituting a complete display (2) for presentation of the current oven function by means of suitable symbols being lit on or off by commands from said microprocessor (6).

7. The control unit device according to claim 6, **characterized in that**
said control unit device comprises a communication means (16) for external entry, by means of which said product definition pattern, essentially in the form of data bytes or data words representing different desired definition patterns generated by said developing tool unit (DTU), is transferred to said control unit device (CU) at a late state in the production and assembly of a final product, and
that said transferred product definition pattern of said final product then is continuously stored in a nonvolatile memory device (12) within said control unit device (CU), thereby determining the specific qualities of the specific said final product.

8. The control unit device according to claim 7, **characterized in that**
said communication means (16) preferably operates wire-less, primarily optically, and
said communication means (16) has its own communication protocol which precludes unintentional altering of said product definition pattern, but simultaneously facilitates a change of said production definition pattern on demand by using an authorized corresponding communication means.

9. The control unit device according to claim 8, **characterized in that**
a printed circuit board of said control unit device (CU) comprises a temperature sensor which in part serves to control the ambient temperature of said printed circuit board and in part serves as a reference for at least one additional temperature sensor (18), e.g., in the form of an oven sensor (15), which is used for the regulation of the oven temperature and when appropriate also for safety supervision in pyrolythic cleaning.

10. The control unit device according to claim 9, **characterized in that**
said control unit device further comprises at least an additionally stored control program by means of which said oven may be forcedly controlled to verify and/or simulate different functions (21-35).

11. A computerized tool for a control unit device (CU), to define and program a universal control unit device (CU), said control unit device (CU) being capable of being configured to control a variety of types of oven, said oven being either heated electrically or by means of gas,
the control unit device (CU) comprising inputs for electrical connection of at least a temperature sensor and manually activated setting means and outputs for electrical control of one or more of; heater elements, gas burner, grill elements, convection fan, steam generator, rotating grill spit, microwave generator, additional cooling fan for general cooling of said control unit device as well as inputs and outputs for safety functions;
the control unit device (CU) further comprising a microprocessor (6) and logic electronic circuitry as well as memory means (12, 17) storing control program and manually entered control data of said oven, the microprocessor (6) being organized to fetch necessary program and control data information from said memory means (12, 17) in order to perform desired oven functions,
**characterized in that**
said computerized tool, essentially a Personal Computer with interfacing electronics, forms a developing tool unit (DTU) by the aid of which a product definition pattern is created, said product definition pattern includes a multiplicity of definition patterns, each of which, in turn, comprises a multiplicity of sub-definitions, which define sub-functions, said sub-functions also in turn comprising a multiplicity of different possible sub-function portions, where each sub-function portion relates to a particular function in a multiplicity of possible oven functions (21-35), whereby each sub-function portion may be described by a data byte or a data word, different data bits further referring to a desired function within the multiplicity of possible oven functions,
said product definition pattern being represented in the form of graphical images or symbols on the computer display by means of which images or symbols the different possible sub-function portions are visualized in the form of selectable alternatives for a logical design of different definition patterns, such a definition pattern corresponding to a desired oven function.

12. The computerized tool according to claim 11, **characterized in that**
said computerized tool comprises logical functions (21-35) corresponding to the physical functions (RL1-RL8) of the oven control unit device (CU), whereby each modification of a definition pattern immediately will be checked and a monitoring will take place such that only possible or, for a certain defined product, allowed selections of sub-definitions with respective sub-function portions defining functions within the multiplicity of possible functions may be selected.

13. The computerized tool according to claim 11 or 12, **characterized in that**
said computerized tool further comprises a transfer device for transferring the stored product definition pattern generated by said programming tool unit (DTU) to the control unit device (CU) for storage in a programmable nonvolatile memory device (12) for producing a functionally defined control unit device (CU), and
that said computerized tool comprises additional software for monitoring of a transferred product definition pattern and its action upon said control unit device (CU).

## Patentansprüche

1. Verfahren zum Definieren und Programmieren einer zum Regeln einer Vielzahl von Ofentypen konfigurierbaren universellen Regelungseinheit (CU), wobei der Ofen entweder elektrisch oder durch Gas erhitzt wird,
wobei die Regelungseinheit (CU) Eingänge für die elektrische Verbindung zumindest mit einem Temperatursensor und einer manuell aktivierten Einstelleinrichtung und Ausgänge zur elektrischen Regelung eines oder mehrerer Elemente aus der Gruppe von Heizelementen, Gasbrenner, Grillelementen, Konvektionsventilator, Dampfgenerator, Drehgrillteilung, Mikrowellengenerator, zusätzlichem Kühlventilator zum Kühlen der Regelungseinheit, sowie Eingänge und Ausgänge für Sicherheitsfunktionen aufweist,
wobei die Regelungseinheit (CU) weiterhin einen Mikroprozessor (6) und eine logische elektronische Schaltungsanordnung sowie Speichereinheiten (12, 17) zum Abspeichern eines Regelungsprogramms und manuell eingegebener Regelungsdaten des Ofens aufweist und dabei der Mikroprozessor (6) zum Abrufen Programm- und Regelungsdaten betreffender notwendiger Informationen aus den Speichereinheiten (12, 17) zum Ausführen gewünschter Ofenfunktionen (21-35) organisiert ist, **dadurch gekennzeichnet**, daß ein rechnergestütztes Werkzeug in Form eines Entwicklungswerkzeugs (DTU) ein Produktdefinitionsmuster für jeden Ofentyp generiert,
wobei das Produktdefinitionsmuster eine Mehrzahl von Definitionsmustern aufweist, von denen jedes der Reihe nach eine Mehrzahl von Unter-Funktionen definierenden Unter-Definitionen aufweist, wobei die Unter-Funktionen ebenso der Reihe nach eine Mehrzahl verschiedener möglicher Unter-Funktions-Teile aufweisen, wobei jeder Unter-Funktions-Teil durch ein Datenbyte oder ein Datenwort beschrieben sein kann, wobei sich unterschiedliche Bits auf eine bestimmte Funktion aus einer Mehrzahl möglicher Funktionen (21-35) beziehen,
wobei die vollständige Funktion der Regelungseinheit (CU) weiterhin durch eine Kombination einer Anzahl solcher Definitionsmuster in dem Produktdefinitionsmuster definiert ist, welches dann durch den Mikroprozessor (6) verwendet und interpretiert wird, um die Regelung zum Erhalten der gewünschten Ofenfunktionen auszuführen,
und daß durch diese Definitionsmuster logische Relais generiert werden, deren logischen Ausgänge (A-H) zum direkten oder indirekten Regeln physischer Relais (RL1-RL8) zum Erreichen der gewünschten Ofenfunktionen verwendet werden.

2. Verfahren nach Anspruch 1, **dadurch gekennzeichnet**, daß in dem Entwicklungswerkzeug (DTU), welches das die gewünschte Funktion des Ofens darstellende Produktdefinitionsmuster generiert, Definitionsmuster vordefinierter, möglicher, unterschiedlicher und zulässiger Funktionskombinationen eingeschlossen sind, die von dem logischen Aufbau von Hardware und Software des Entwicklungswerkzeugs abhängen und der Hardware bzw. Software der Regelungseinheit (CU) des Ofens entsprechen.

3. Verfahren nach Anspruch 2, **gekennzeichnet durch**
eine Verwendung einer eine Kommunikationseinheit aufweisenden Programmierungseinheit (PTU), durch die das Produktdefinitionsmuster, das durch das Entwicklungswerkzeug (DTU) hauptsächlich in Form von die Definitionsmuster darstellenden Datenbytes oder Datenwörtern generiert wird, zu der Regelungseinheit (CU) übersendet wird, vorzugsweise in einem späten Produktionsschritt; und
ein darauf folgendes Abspeichern des übersendeten Produktdefinitionsmusters in einer speziell hierfür vorgesehenen programmierbaren permanenten Speichereinheit (12) in der Regelungseinheit (CU), um die durch die Regelungseinheit geregelten speziellen Eigenschaften eines gewünschten Endprodukts festzulegen.

4. Verfahren nach Anspruch 3, **dadurch gekennzeichnet**, daß vordefinierte Faktoren, die zunächst die Möglichkeit verschiedener zulässiger Funktionskombinationen steuern, die technischen logischen Hardware- und Software-Definitionen des Entwicklungswerkzeugs (DTU) darstellen, wobei jede gefertigte Variante des Endprodukts bereits bei der Generierung des Produktdefinitionsmuster funktionssimuliert wird.

5. Regelungseinheit (CU), die für die Regelung einer Vielzahl von Ofentypen konfigurierbar ist, wobei der Ofen entweder elektrisch oder alternativ durch Gas erhitzt wird,
wobei die Regelungseinheit (CU) Eingänge für die elektrische Verbindung zumindest mit einem Temperatursensor und einer manuell aktivierten Einstelleinrichtung und Ausgänge zur elektrischen Regelung eines oder mehrerer Elemente aus der Gruppe von Heizelementen, Gasbrenner, Grillelementen, Konvektionsventilator, Dampfgenerator, Drehgrillteilung, Mikrowellengenerator, zusätzlichem Kühlventilator zum Kühlen der Regelungseinheit, sowie Eingänge und Ausgänge für Sicherheitsfunktionen aufweist,
wobei die Regelungseinheit (CU) weiterhin einen Mikroprozessor (6) und eine logische elektronische Schaltungsanordnung sowie Speichereinheiten (12, 17) zum Abspeichern eines Regelungsprogramms und manuell eingegebener Regelungsdaten des Ofens aufweist und dabei der Mikroprozessor (6) zum Abrufen Programm- und Regelungsdaten betreffender notwendiger Informationen aus den Speichereinheiten (12, 17) zum Ausführen gewünschter Ofenfunktionen (21-35) organisiert ist, **dadurch gekennzeichnet**, daß die Regelungseinheit (CU) zum Regeln und Überwachen eines bestimmten Ofentyps durch Produktdefinitionsmuster, generiert durch ein rechnergestütztes Werkzeug in Form eines Entwicklungswerkzeugs (DTU) und abgespeichert in einem programmierbaren permanenten Speicherteil (12) der Speichereinheiten (12, 17), konfiguriert ist,
wobei das Produktdefinitionsmuster eine Mehrzahl von Definitionsmustern aufweist, von denen jedes der Reihe nach eine Mehrzahl von Unter-Funktionen definierenden Unter-Definitionen aufweist, wobei die Unter-Funktionen ebenso der Reihe nach eine Mehrzahl verschiedener möglicher Unter-Funktions-Teile aufweisen, wobei sich jeder Unter-Funktions-Teil auf eine bestimmte Funktion aus einer Mehrzahl möglicher Funktionen (21-35) bezieht, und
daß durch die Definitionsmuster logische Relais generiert werden, deren logischen Ausgänge (A-H) zum direkten oder indirekten Regeln der physischen Relais (RL1-RL8) zum Erreichen der gewünschten Ofenfunktionen verwendet werden.

6. Regelungseinheit nach Anspruch 5, **dadurch gekennzeichnet**, daß die Regelungseinheit ein universelles Bauteil für alle in unterschiedlichen Märkten angebotenen Produktvarianten ist, die Regelungseinheit (CU) eine erste integrierte physische Einrichtung aufweist, die einfach lösbar und ersetzbar ausgebildet ist, und eine zweite physische Einrichtung (3) mit Stromversorgung und Relais für die Betätigung der unterschiedlichen Regelglieder ausbildet, wobei die zweite Einrichtung ebenso einfach lösbar und ersetzbar ausgebildet ist,
wobei die erste Einrichtung gleichzeitig ein vollständiges Display (2) zum Anzeigen der vorliegenden Ofenfunktion durch geeignete Symbole, die durch Befehle des Mikroprozessors (6) ein- und ausgeschaltet werden, ausbildet.

7. Regelungseinheit nach Anspruch 6, **dadurch gekennzeichnet**, daß die Regelungseinheit eine Kommunikationseinheit (16) zur externen Eingabe aufweist, durch die das Produktdefinitionsmuster, das hauptsächlich in Form von die unterschiedlichen gewünschten Definitionsmuster darstellenden Datenbytes oder Datenwörtern durch das Entwicklungswerkzeug (DTU) generiert wird, in einem späten Schritt der Fertigung und Montage des spezifischen Endprodukts zu der Regelungseinheit (CU) übersendet wird.

8. Regelungseinheit nach Anspruch 7, **dadurch gekennzeichnet**, daß
die Kommunikationseinheit (16) vorzugsweise kabellos, insbesondere optisch, arbeitet, und
die Kommunikationseinheit (16) ihr eigenes Kommunikationsprotokoll besitzt, das eine unbeabsichtigte Veränderung des Produktdefinitionsmusters verhindert, aber gleichzeitig eine Veränderung des Produktdefinitionsmusters bei Bedarf durch Verwendung einer authorisierten entsprechenden Kommunikationseinheit ermöglicht.

9. Regelungseinheit nach Anspruch 8, **dadurch gekennzeichnet**, daß eine Platine der Regelungseinheit (CU) einen Temperatursensor aufweist, der teilweise zur Regelung der Umgebungstemperatur der Platine und teilweise als Referenz für mindestens einen zusätzlichen Temperatursensor (18), beispielsweise in Form eines Ofensensors (15) für die Regulierung der Ofentemperatur, und, wenn erforderlich, zur Sicherheitsüberwachung bei einer pyrolytischen Reinigung dient.

10. Regelungseinheit nach Anspruch 9, **dadurch gekennzeichnet**, daß
die Regelungseinheit weiterhin mindestens ein zusätzlich gespeichertes Regelungsprogramm aufweist, durch das der Ofen geregelt werden kann, um verschieden Funktionen (21-35) zu variieren und/oder zu simulieren.

11. Rechnergestütztes Werkzeug für eine Regelungseinheit (CU) zum Definieren und Programmieren der zum Regeln einer Vielzahl von Ofentypen konfigurierbaren universellen Regelungseinheit (CU), wobei der Ofen entweder elektrisch oder durch Gas erhitzt wird,
wobei die Regelungseinheit (CU) Eingänge für die elektrische Verbindung zumindest mit einem Temperatursensor und einer manuell aktivierten Einstelleinrichtung und Ausgänge zur elektrischen Regelung eines oder mehrerer Elemente aus der Gruppe von Heizelementen, Gasbrenner, Grillelementen, Konvektionsventilator, Dampfgenerator, Drehgrillteilung, Mikrowellengenerator, zusätzlichem Kühlventilator zum Kühlen der Regelungseinheit, sowie Eingänge und Ausgänge für Sicherheitsfunktionen aufweist,
wobei die Regelungseinheit (CU) weiterhin einen Mikroprozessor (6) und eine logische elektronische Schaltungsanordnung sowie Speichereinheiten (12, 17) zum Abspeichern eines Regelungsprogramms und manuell eingegebener Regelungsdaten des Ofens aufweist und dabei der Mikroprozessor (6) zum Abrufen Programm- und Regelungsdaten betreffender notwendiger Informationen aus den Speichereinheiten (12, 17) zum Ausführen gewünschter Ofenfunktion (21-35) organisiert ist, **dadurch gekennzeichnet**, daß
das rechnergestützte Werkzeug, im wesentlichen ein Personal Computer mit verbundenen elektronischen Bauteilen, ein Entwicklungswerkzeug (DTU) bildet, das ein Produktdefinitionsmuster für jeden Ofentyp generiert, wobei das Produktdefinitionsmuster eine Mehrzahl von Definitionsmustern aufweist, von denen jedes der Reihe nach eine Mehrzahl von Unter-Funktionen definierenden Unter-Definitionen aufweist, wobei die Unter-Funktionen ebenso der Reihe nach eine Mehrzahl verschiedener möglicher Unter-Funktions-Teile aufweisen, wobei sich jeder Unter-Funktions-Teil auf eine bestimmte Funktion aus einer Mehrzahl möglicher Funktionen (21-35) bezieht, wobei jeder Unter-Funktions-Teil durch ein Datenbyte oder ein Datenwort beschrieben sein kann, wobei sich unterschiedliche Datenbits weiterhin auf eine gewünschte Funktion aus der Mehrzahl möglicher Ofenfunktionen beziehen,
wobei das Produktdefinitionsmuster in Form von graphischen Abbildungen oder Symbolen auf dem Computer Display dargestellt ist, durch welches Abbildungen oder Symbole der unterschiedlichen möglichen Unter-Funktions-Teile in Form auswählbarer Alternativen visualisiert sind, um ein logisches Design verschiedener Defininitionsmuster zu erreichen, wobei ein solches Definitionsmuster einer gewünschten Ofenfunktion entspricht.

12. Rechnergestütztes Werkzeug nach Anspruch 11, **dadurch gekennzeichnet**, daß
das rechnergestützte Werkzeug logische Funktionen (21-35) aufweist, die den physischen Funktionen (RL1-RL8) der Regelungseinheit (CU) des Ofens entsprechen, wobei jede Modifikation eines Definitionsmusters sofort überprüft wird und eine Überwachung stattfindet, so daß ausschließlich eine mögliche oder, für ein bestimmtes Produkt, zulässige Auswahl von Unter-Definitionen mit entsprechenden Unter-Funktions-Teilen, die Funktionen aus der Mehrzahl möglicher Funktionen definieren, getroffen werden kann.

13. Rechnergestütztes Werkzeug nach Anspruch 11 oder 12, **dadurch gekennzeichnet**, daß
das rechnergestützte Werkzeug weiterhin eine Übertragungsvorrichtung aufweist, welche die abgespeicherten, durch das Entwicklungswerkzeug (DTU) generierten, Produktdefinitionsmuster zu der Regelungseinheit (CU) übersendet, um diese in einer programmierbaren permanenten Speichereinheit (12) abzuspeichern, um eine funktionell festgelegte Regelungseinheit (CU) zu erreichen, und daß
das rechnergestütztes Werkzeug zusätzliche Software zur Überwachung eines übersendeten Produktdefinitionsmusters und seines Arbeitens in Bezug auf die Regelungseinheit (CU) aufweist.

## Revendications

1. Procédé pour définir et programmer une unité de commande universelle (CU) pouvant être configurée de manière à commander divers types de four, ledit four étant chauffé électriquement ou au moyen d'un gaz ;
l'unité de commande (CU) comprenant des entrées pour connexion électrique d'au moins un capteur de température et de moyens de réglage actionnés manuellement, et des sorties pour commande électrique d'un ou plusieurs éléments chauffants, brûleur à gaz, éléments de grilloir, ventilateur de convexion, générateur de vapeur, broche rotative, générateur à microondes, ventilateur de refroidissement additionnel pour le refroidissement général de ladite unité de commande, ainsi que des entrées et des sorties pour des fonctions de sécurité ;
l'unité de commande (CU) comprenant en outre un microprocesseur (6) et un circuit électronique logique ainsi que des moyens de mémoire (12,17) stockant un programme de commande et des données de commande dudit four entrées manuellement, le microprocesseur (6) étant organisé pour extraire desdits moyens de mémoire (12,17) les informations de programme et de données de commande nécessaires afin d'exécuter les fonctions désirées (21-35) du four ;
caractérisé en ce que :
un outil informatisé sous la forme d'une unité d'outil de développement (DTU) engendre une configuration de définition de produit pour chaque type de four ;
ladite configuration de définition de produit comprend une multiplicité de configurations de définition dont chacune comprend à son tour une multiplicité de sous-définitions qui définissent des sous-fonctions, les dites sous-fonctions comprenant également à leur tour une multiplicité de portions de sous-fonction possibles différentes, chaque portion de sous-fonction pouvant être décrite au moyen d'un octet de données ou d'un mot de données dans lequel les différents bits concernent une fonction particulière dans une multiplicité de fonctions possibles (21-35) ;
la fonction de l'unité de commande complète (CU) est en outre définie par une combinaison d'un certain nombre de telles configurations de définition pour obtenir ladite configuration de définition de produit qui est ensuite utilisée et interprétée par ledit microprocesseur (6) pour exécuter ladite commande afin d'obtenir lesdites fonctions désirées du four ; et
au moyen desdites configurations de définition, on engendre des relais logiques dont les sorties logiques (A-H) sont utilisées pour commander directement ou indirectement des relais physiques (RL1-RL8) afin d'obtenir lesdites fonctions désirées du four.

2. Procédé suivant la revendication 1, caractérisé en ce que, à l'intérieur de ladite unité d'outil de développement (DTU) qui engendre ladite configuration de définition de produit représentant la fonction désirée du four, sont incluses des configurations de définition de combinaisons de fonctions permises différentes possibles prédéfinies qui dépendent de la construction logique du matériel et du logiciel de ladite unité d'outil de développement et correspondent également au matériel et au logiciel, respectivement, de ladite unité de commande de four (CU).

3. Procédé suivant la revendication 2, caractérisé.en ce que :
on utilise une unité d'outil de programmation (PTU) comprenant un moyen de communication par lequel ladite configuration de définition de produit, engendrée par ladite unité d'outil de développementr (DTU) essentiellement sous la forme d'octets de données ou de mots de données représentant lesdites configurations de définition, est transférée à ladite unité de commande (CU) , principalement à un état tardif pendant la fabrication ; et
ladite configuration de définition de produit transférée est ensuite continuellement stockée dans un dispositif de mémoire non volatile programmable (12) particulièrement prévu dans ce but dans ladite unité de commande (CU), afin de décider ensuite des qualités spécifiques qui sont commandées par cette unité de commande dans un produit final désiré.

4. Procédé suivant la revendication 3, caractérisé en ce que des facteurs prédéfinis commandant initialement la possibilité de combinaisons de fonctions autorisées différentes représentent les définitions logiques techniques du matériel et du logiciel de ladite unité d'outil de développement (DTU), chaque variante fabriquée dudit produit final étant simulée dans sa fonction déjà lors de la génération de ladite configuration de définition de produit.

5. Unité de commande (CU) pouvant être configurée pour commander divers types de four, ledit four étant chauffé électriquement ou en variante au moyen de gaz ;
l'unité de commande (CU) comprenant des entrées, pour connexion électrique d'au moins un capteur de température et de moyens de réglage actionnés manuellement, et des sorties pour commande électrique d'un ou plusieurs d'éléments chauffants, brûleur à gaz, élements de grilloir, ventilateur de convexion, générateur de vapeur, broche rotative, générateur à microondes, ventilateur de refroidissement additionnel pour le refroidissement général de ladite unité de commande, ainsi que des entrées et des sorties pour des fonctions de sécurité ;
l'unité de commande (CU) comprenant en outre un microprocesseur (6) et un circuit électronique logique ainsi que des moyens de mémoire (12,17) stockant un programme de commande et des données de commande entrées manuellement dudit four, le microprocesseur (6) étant - organisé pour extraire desdits moyens de mémoire (12,17) les informations de programme et de données de commande nécessaires afin d'exécuter les fonctions désirées du four ;
caractérisée en ce que :
ladite unité de commande (CU) est configurée pour commander et superviser un type particulier desdits types de four au moyen d'une configuration de définition de produit engendrée par un outil informatisé sous la forme d'une unité d'outil de développement (DTU) et stockée dans une portion de mémoire non volatile programmable (12) desdits moyens de mémoire (12,17) ;
ladite configuration de définition de produit comprend une multiplicité de configurations de définition dont chacune comprend à son tour une multiplicité de sous-définitionsqui définissent des sous-fonctions; les dites sous-fonctions comprenant également à leur tour une multiplicité de portions de sous-fonctions possibles différentes, chaque portion de sous-fonction concernant une fonction particulière dans une multiplicité de fonctions possibles (21-35) ; et
au moyen desdites configurations de définition, on génère des relais logiques dont les sorties logiques (A-H) sont utilisées pour commander directement ou indirectement des relais physiques (RL1-RL8) afin d'obtenir les dites fonctions désirées du four.

6. Unité de commande suivant la revendication 5, caractérisée en ce que :
ladite unité de commande forme un composant universel conçu pour toutes les variantes de produit disponibles sur différents marchés ; et
ladite unité de commande (CU) comprend alors en partie une première unité physique intégrée à enlever et remplacer de façon simple, et constitue en partie une deuxième unité physique (3) comportant une alimentation en énergie et des relais pour la commande des différents éléments fonctionnels, ladite deuxième unité pouvant également être enlevée et remplacée de façon simple ;
ladite première unité constituant simultanément un affichage complet (2) pour la présentation de la fonction en cours du four au moyen de symboles appropriés allumés ou éteints par des instructions fournies par ledit microprocesseur 6.

7. Unité de commande suivant la revendication 6, caractérisée en ce que :
ladite unité de commande comprend un moyen de communication (16) pour une entrée extérieure, au moyen duquel ladite configuration de définition de produit, essentiellement sous la forme d'octets de données ou de mots de données représentant différentes configurations de définition désirées engendrées par ladite unité d'outil de développement (DTU), est transférée à ladite unité de commande (CU) à un état tardif dans la production et l'assemblage d'un produit final ; et
ladite configuration de définiition de produit transférée dudit produit final est ensuite continuellement stockée dans un dispositif de mémoire non volatile (12) à l'intérieur de ladite unité de commande (CU), afin de déterminer les qualités spécifiques dudit produit final spécifique.

8. Unité de commande suivant la revendication 7, caractérisée en ce que :
ledit moyen de communication (16) fonctionne de préférence sans fil, principalement optiquement ; et
ledit moyen de communication (16) possède son propre protocole de communication qui empêche la modification involontaire de ladite configuration de définition de produit mais facilite en même temps un changement de ladite configuration de définition de produit à la demande par utilisation d'un moyen de communication correspondant autorisé.

9. Unité de commande suivant la revendication 8, caractérisée en ce que :
une carte de circuit imprimé de ladite unité de commande (CU) comprend un capteur de température qui sert en partie à contrôler la température ambiante de ladite carte de circuit imprimé et qui sert en partie comme référence pour au moins un capteur de température additionnel (18), par exemple sous la forme d'un capteur de four (15), qui est utilisé pour la régulation de la température du four et également, lorsqu'il y a lieu, pour une supervision de sécurité dans un nettoyage par pyrolyse.

10. Unité de commande suivant la revendication 9, caractérisée en ce que :
ladite unité de commande comprend en outre au moins un programme de commande stocké additionnellement, au moyen duquel ledit four peut être commandé de façon forcée pour vérifier et/ou simuler différentes fonctions (21-35).

11. Outil informatisé pour une unité de commande, pour définir et programmer une unité de commande universelle (CU), ladite unité de commande (CU) pouvant être configurée de manière à commander divers types de four, ledit four étant chauffé électriquement ou au moyen d'un gaz ; l'unité de commande (CU) comprenant des entrées, pour connexion électrique d'au moins un capteur de température et de moyens de réglage actionnés manuellement, et des sorties pour commande électrique d'un ou plusieurs éléments chauffants, brûleur à gaz, éléments de grilloir, ventilateur de convexion, générateur de vapeur, broche rotative, générateur à microondes, ventilateur de refroidissement additionnel pour le refroidissement général de ladite unité de commande, ainsi que des entrées et des sorties pour des fonctions de sécurité ;
l'unité de commande (CU) comprenant en outre un microprocesseur (6) et un circuit électronique logique ainsi que des moyens de mémoire (12,17) stockant un programme de commande et des données de commande entrées manuellement dudit four, le microprocesseur (6) étant organisé pour extraire desdits moyens de mémoire (12,17) les informations de programme et de données de commande nécessaires afin d'exécuter les fonctions désirées du four,
caractérisé en ce que :
ledit outil informatisé, essentiellement un Ordinateur Personnel avec des circuits électroniques d'interface, forme une unité d'outil de développement (DTU) à l'aide de laquelle on crée une configuration de définition de produit, ladite configuration de définition de produit incluant une multiplicité de configurations de définition dont chacune comprend à son tour une multiplicité de sous-définitions qui définissent des sous-fonctions, lesdites sous-fonctions comprenant également à leur tour une multiplicité de différentes portions de sous-fonction possibles, chaque portion de sous-fonction concernant une fonction particulière dans une multiplicité de fonctions de four possibles (21-35), de sorte que chaque portion de sous-fonction peut être décrite par un octet de données ou un mot de données, les différents bits de données se référant en outre à une fonction désirée dans la multiplicité de fonctions de four possibles ;
ladite configuration de définition de produit étant représentée sous la forme d'images graphiques ou de symboles sur l'affichage de l'ordinateur, ces images ou symboles permettant de visualiser les différentes portions de sous-fonction possibles sous la forme d'alternatives sélectables pour une conception logique de différentes configurations de définition, telles qu'une configuration de définition correspondant à une fonction désirée du four.

12. Outil informatisé suivant la revendication 11, caractérisé en ce que :
ledit outil informatisé comprend des fonctions logiques (21-35) correspondant aux fonctions physiques (RL1-RL8) de l'unité de commande de four (CU), de sorte que chaque modification d'une configuration de définition est immédiatement vérifiée et un contrôle est effectué de sorte que seulement des sélections possibles ou, pour un certain produit défini, des sélections autorisées de sous-définitions avec des portions de sous-fonctions respectives définissant des fonctions parmi la multiplicité de fonctions possibles peuvent être choisies.

13. Outil informatisé suivant la revendication 11 ou 12, caractérisé en ce que :
ledit outil informatisé comprend en outre un dispositif de transfert pour transférer la configuration de définition de produit stockée, engendrée par ladite unité d'outil de programmation (DTU), à l'unité de commande (CU) pour stockage dans un dispositif de mémoire non volatile programmable (12) afin de produire une unité de commande fonctionnellement définie (CU), et
ledit outil informatisé comprend un logiciel additionnel pour contrôler une configuration de définition de produit transférée et son action sur ladite unité de commande (CU).
